# EUROPEAN PATENT APPLICATION

(11) **EP 4 600 285 A1**
(43) Date of publication of application: **13.08.2025**
(21) Application number: 24156709.8
(22) Date of filing: 09.02.2024
(51) Int. Cl.: C08G 18/20, C08G 18/24, C08G 18/48, C08G 18/76, C08K 3/20, C08L 75/08, C09J 175/08, C08J 9/06, C08K 3/32

(54) **FOAMABLE POLYURETHANE COMPOSITION COMPRISING A NITRILE**

(71) Applicant: Henkel AG & Co. KGaA, 40589 Düsseldorf (DE)
(72) Inventor: Demir, Furkan, 51373 Leverkusen (DE); Franken, Uwe, 41542 Dormagen (DE)

(57) **Abstract**

The present invention relates to a foamable polyurethane composition comprising a nitrile, in particular a foamable polyurethane composition comprising an aliphatic nitrile having 2 to 20 carbon atoms and/or an alicyclic nitrile having 6 to 20 carbon atoms, which is able to foam under room temperature, to a foam obtained by curing and foaming the foamable polyurethane composition, and to a method of bonding substrates by using the foamable polyurethane composition.

## Description

The present invention relates to a foamable polyurethane composition comprising a nitrile, in particular a foamable polyurethane composition comprising an aliphatic nitrile having 2 to 20 carbon atoms and/or an alicyclic nitrile having 6 to 20 carbon atoms, which is able to foam under room temperature, to a foam obtained by curing and foaming the foamable polyurethane composition, and to a method of bonding substrates by using the foamable polyurethane composition.

Polyurethane foam is widely used for vehicles, furniture, bedding and miscellaneous goods due to the cushioning properties of the foam. Polyurethane foam is commonly prepared by reacting aromatic polyisocyanate with polyol and/or polymeric polyol, in the presence of water as a blowing agent, surfactant, catalyst, and when needed, filler, crosslinking agent, flame retardant and colorant. Water, the blowing agent, reacts with aromatic polyisocyanate and releases carbon dioxide which acts as blowing gas. At the same time, aromatic polyurea is formed and built in the foam structure.

In recent years, use of a conventional blowing agent (Freon), CFC-11 has been forbidden on the basis of the Montreal Protocol in order to protect global environment. Water was conventionally a blowing additive when Freon was used. However, as a result of the treaty, water has been used as an alternative blowing agent so as to exhibit similar blowing effect. Thus, amount of water used in the formulation has been increased.

However, increase of water leads to greater amount of generated carbon dioxide gas and has negative influence on shape stability and durability of the foam. In addition, the higher water amount requires more polyisocyanate to generate carbon dioxide, and thus the material cost is further increased.

Therefore, there is a strong need to develop a foamable polyurethane composition which does not rely on water as blowing agent, is able to foam under room temperature, and still possess similar properties of conventional water-blown polyurethane foams.

These objects are achieved by the invention. One subject matter of the invention relates to a foamable polyurethane composition, comprising:
at least one polymeric polyol having an average hydroxyl functionality from at least 1.8,
at least one polyisocyanate having on average at least two isocyanate groups per molecule,
at least one nitrile selected from an aliphatic nitrile having 2 to 20 carbon atoms, an alicyclic nitrile having 6 to 20 carbon atoms, and combination thereof, and
at least one catalyst.

Another subject matter relates to a foam obtained by curing and foaming the foamable polyurethane composition according to the present invention at a temperature from 20°C to 30°C.

Yet another subject matter relates to a method of bonding two substrates together, comprising:
providing the foamable polyurethane composition according to the present invention,
applying the composition to one or more surfaces of at least a first substrate,
placing at least one surface of a second substrate in contact with the foamable polyurethane composition, and
allowing the foamable polyurethane composition to cure and foam from 20°C to 30°C.

Yet another subject matter relates to a foam product obtained by curing and foaming a foamable polyurethane composition according to the present invention.

Yet another subject matter relates to use of the foamable polyurethane composition according to the present invention or the foam according to the present invention in bonding articles having substrates made of composite materials selected from unsaturated polyester resin materials, vinyl ester resin materials, epoxy resin materials, metals, plastic materials, and mixture thereof.

Unless specified otherwise, as used herein, the terms "a", "an" and "the" include both singular and plural referents.

The terms "comprising" and "comprises" as used herein are synonymous with "including", "includes" or "containing", "contains", and are inclusive or open-ended and do not exclude additional, non-recited members, elements or process steps.

The term "at least one" or "one or more" used herein to define a component refers to the type of the component, and not to the absolute number of molecules.

### Polymeric polyol

The foamable polyurethane composition comprises at least one polymeric polyol preferably having an average hydroxyl functionality from at least 1.8, preferably from 1.8 to 6.0, more preferably from 1.8 to 4.0.

As used in this specification, the terms "polymer" and "polymeric" means prepolymers, oligomers, and both homopolymers and copolymers. As used in this specification, "prepolymer" means a polymer precursor capable of further reactions or polymerization by one or more reactive groups to form a higher molecular mass or cross-linked state. As used in this specification, the prefix "poly" refers to two or more. A polyol is understood to be a compound containing more than one hydroxyl (-OH) group in the molecule. A polyol can further have other functionalities on the molecule. The term "polyol" encompasses a single polyol or a mixture of two or more polyols. The average hydroxyl (-OH) functionality refers to the average number of reactive hydroxyl groups contained in one molecule of polyol. The term "average hydroxyl functionality" means the actual (nominal) functionality of the hydroxy group of the polyol. Thus, it is to be understood that, while triol has theoretical functionality of 3 and diol has theoretical functionality of 2, commercially available triols and diols are not usually expected to exhibit nominal functionalities as high as their theoretical functionalities.

In one embodiment, the polymeric polyol is selected from polymeric diol, polymeric triol, polymeric tetraol and combination thereof. In one preferred embodiment, the polymeric polyol comprises or is a combination of at least one polymeric diol and at least one polymeric triol. In another preferred embodiment, the polymeric polyol comprises or is a combination of two or more polymeric diols. In yet another preferred embodiment, the polymeric polyol comprises or is a combination of two or more polymeric triols. In view of balancing the speed of the curing reaction and the blowing reaction to achieve an improved foaming property, the polymeric polyol is a combination of at least one polymeric diol and at least one polymeric triol.

The polymeric polyol may have a weight average molecular weight of from 400 to 10000 g/mol, preferably from 400 to 8000 g/mol, more preferably from 400 to 7000 g/mol and in particular from 1000 to 6000. "Molecular weight" herein refers to weight average molecular weight unless otherwise specified. The weight average molecular weight Mw, is determined according to the present invention by gel permeation chromatography (GPC, also known as SEC) at 23°C using a styrene standard according to DIN EN ISO 16014-5:2012-10.

The polymeric polyol may also have a hydroxyl value from 10 to 500 mg KOH/g, preferably from 20 to 400 mg KOH/g, and more preferably from 50 to 350 mg KOH/g, measured according to DIN EN ISO 4629.

Some suitable polymeric polyols include the reaction products of low molecular weight polyhydric alcohols with alkylene oxides, so-called polyether polyols. The alkylene oxides preferably contain 2 to 4 carbon atoms. Some reaction products of this type include, for example, the reaction products of ethylene glycol, propylene glycol, the isomeric butane diols, hexane diols or 4,4'-dihydroxydiphenyl propane with ethylene oxide, propylene oxide or butylene oxide or mixtures of two or more thereof. The reaction products of polyhydric alcohols, such as glycerol, trimethylol ethane or trimethylol propane, pentaerythritol or sugar alcohols or mixtures of two or more thereof, with the alkylene oxides mentioned to form polyether polyols are also suitable. Thus, depending on the desired molecular weight, products of the addition of only a few mol ethylene oxide and/or propylene oxide per mol or of more than one hundred mol ethylene oxide and/or propylene oxide onto low molecular weight polyhydric alcohols may be used. Other polyether polyols are obtainable by condensation of, for example, glycerol or pentaerythritol with elimination of water. Some suitable polyols include those polyols obtainable by polymerization of tetrahydrofuran.

The polyether polyols are reacted in known manner by reacting the starting compound containing a reactive hydrogen atom with alkylene oxides, for example ethylene oxide, propylene oxide, butylene oxide, styrene oxide, tetrahydrofuran or epichlorohydrin or mixtures of two or more thereof.

Suitable starting compounds are, for example, water, ethylene glycol, 1,2- or 1,3-propylene glycol, 1,4- or 1,3-butylene glycol, hexane-1,6-diol, octane-1,8-diol, neopentyl glycol, 1,4-hydroxymethyl cyclohexane, 2-methyl propane-1,3-diol, glycerol, trimethylol propane, hexane-1,2,6-triol, butane-1,2,4-triol, trimethylol ethane, pentaerythritol, mannitol, sorbitol, methyl glycosides, sugars, phenol, isononylphenol, resorcinol, hydroquinone, 1,2,2- or 1,1,2-tris-(hydroxyphenyl)-ethane, ammonia, methyl amine, ethylenediamine, tetra- or hexamethylenediamine, triethanolamine, aniline, phenylenediamine, 2,4- and 2,6-diaminotoluene and polyphenylpolymethylene polyamines, which may be obtained by aniline/formaldehyde condensation, or mixtures of two or more thereof.

Some suitable polymeric polyols include diol EO/PO (ethylene oxide/propylene oxide) block copolymers, EO-tipped polypropylene glycols, or alkoxylated bisphenol A.

Some suitable polymeric polyols include polyether polyols modified by vinyl polymers. These polyols can be obtained, for example, by polymerizing styrene or acrylonitrile or mixtures thereof in the presence of polyether polyol.

Commercial examples of polyether polyol include Arcol series polyols such as Arcol PPG 425, Arcol PPG 2025 from Coverstro, Dianol series polyols such as Dianol 330 from Arkema, Voranol CP series polyols such as Voranol CP 450 and Voranol CP 4755, Caradol series polyols such as ED56-200 and Lupranol series polyols such as Lupranol 2090 from BASF.

Some suitable polymeric polyols include polyester polyols. For example, it is possible to use polyester polyols obtained by reacting low molecular weight alcohols, more particularly ethylene glycol, diethylene glycol, neopentyl glycol, hexanediol, butanediol, propylene glycol, glycerol or trimethylol propane, with caprolactone. Other suitable polyhydric alcohols for the production of polyester polyols are 1,4-hydroxymethylcyclohexane, 2-methylpropane-1,3-diol, butane-1,2,4-triol, triethylene glycol, tetraethylene glycol, polyethylene glycol, dipropylene glycol, polypropylene glycol, dibutylene glycol and polybutylene glycol.

Some suitable polymeric polyols include polyester polyols obtained by polycondensation. Thus, dihydric and/or trihydric alcohols may be condensed with less than the equivalent quantity of dicarboxylic acids and/or tricarboxylic acids or reactive derivatives thereof to form polyester polyols.

Suitable dicarboxylic acids are, for example, adipic acid or succinic acid and higher homologs thereof containing up to 16 carbon atoms, unsaturated dicarboxylic acids, such as maleic acid or fumaric acid, cyclohexane dicarboxylic acid (CHDA), and aromatic dicarboxylic acids, more particularly the isomeric phthalic acids, such as phthalic acid, isophthalic acid or terephthalic acid. Citric acid and trimellitic acid, for example, are also suitable tricarboxylic acids. The acids mentioned may be used individually or as mixtures of two or more thereof. Polyester polyols of at least one of the dicarboxylic acids mentioned and glycerol which have a residual content of OH groups are suitable. Suitable alcohols include but are not limited to propylene glycol, butane diol, pentane diol, hexanediol, ethylene glycol, diethylene glycol, triethylene glycol, dipropylene glycol, tripropylene glycol, cyclohexanedimethanol (CHDM), 2-methyl-1 ,3-propanediol (MPDiol), or neopentyl glycol or isomers or derivatives or mixtures of two or more thereof. High molecular weight polyester polyols may be used in the second synthesis stage and include, for example, the reaction products of polyhydric, preferably dihydric, alcohols (optionally together with small quantities of trihydric alcohols) and polybasic, preferably dibasic, carboxylic acids. Instead of free polycarboxylic acids, the corresponding polycarboxylic anhydrides or corresponding polycarboxylic acid esters with alcohols preferably containing 1 to 3 carbon atoms may also be used (where possible). The polycarboxylic acids may be aliphatic, cycloaliphatic, aromatic or heterocyclic or both. They may optionally be substituted, for example by alkyl groups, alkenyl groups, ether groups or halogens. Suitable polycarboxylic acids are, for example, succinic acid, adipic acid, suberic acid, azelaic acid, sebacic acid, phthalic acid, isophthalic acid, terephthalic acid, trimellitic acid, phthalic anhydride, tetrahydrophthalic anhydride, hexahydrophthalic anhydride, tetrachlorophthalic anhydride, endomethylene tetrahydrophthalic anhydride, glutaric anhydride, maleic acid, maleic anhydride, fumaric acid, dimer fatty acid or trimer fatty acid or mixtures of two or more thereof. Small quantities of monofunctional fatty acids may optionally be present in the reaction mixture.

The polyester polyol may optionally contain a small number of terminal carboxyl groups. Polyesters obtainable from lactones, for example based on ε-caprolactone (also known as "polycaprolactones"), or hydroxycarboxylic acids, for example w-hydroxycaproic acid, may also be used.

Polyester polyols of oleochemical origin may also be used. Oleochemical polyester polyols may be obtained, for example, by complete ring opening of epoxidized triglycerides of a fatty mixture containing at least partly olefinically unsaturated fatty acids with one or more alcohols containing 1 to 12 carbon atoms and subsequent partial transesterification of the triglyceride derivatives to form alkyl ester polyols with 1 to 12 carbon atoms in the alkyl group.

Some suitable polymeric polyols include C36 dimer diols and derivatives thereof. Some suitable polymeric polyols include castor oil and derivatives thereof. Some suitable polymeric polyols include fatty polyols, for example the products of hydroxylation of unsaturated or polyunsaturated natural oils, the products of hydrogenations of unsaturated and polyunsaturated polyhydroxy natural oils, polyhydroxyl esters of alkyl hydroxyl fatty acids, polymerized natural oils, soybean polyols, and alkylhydroxylated amides of fatty acids. Some suitable polyols include the hydroxy functional polybutadienes (polybutadiene polyol, such as Krasol LBH 2000 from Cray Valley). Some suitable polymeric polyols include polyisobutylene polyols. Some suitable polymeric polyols include polyacetal polyols. Polyacetal polyols are understood to be compounds obtainable by reacting glycols, for example diethylene glycol or hexanediol or mixtures thereof, with formaldehyde. Polyacetal polyols may also be obtained by polymerizing cyclic acetals. Some suitable polymeric polyols include polycarbonate polyols. Polycarbonate polyols may be obtained, for example, by reacting diols, such as propylene glycol, butane-1,4-diol or hexane-1,6-diol, diethylene glycol, triethylene glycol or tetraethylene glycol or mixtures of two or more thereof, with diaryl carbonates, for example diphenyl carbonate, or phosgene. Some suitable polymeric polyols include polyamide polyols.

Some suitable polymeric polyols include polyacrylates containing OH groups. These polyacrylates may be obtained, for example, by polymerizing ethylenically unsaturated monomers bearing an OH group. Such monomers are obtainable, for example, by esterification of ethylenically unsaturated carboxylic acids and dihydric alcohols, the alcohol generally being present in a slight excess. Ethylenically unsaturated carboxylic acids suitable for this purpose are, for example, acrylic acid, methacrylic acid, crotonic acid or maleic acid. Corresponding OH-functional esters are, for example, 2-hydroxyethyl acrylate, 2-hydroxyethyl methacrylate, 2-hydroxypropyl acrylate, 2-hydroxypropyl methacrylate, 3-hydroxypropyl acrylate or 3-hydroxypropyl methacrylate or mixtures of two or more thereof.

In one embodiment, the polymeric polyol is selected from a polyether polyol, a polyester polyol, a polybutadiene polyol, polycarbonate polyol, poly(meth)acrylate polyol and the combination thereof. In another embodiment, the polymeric polyol comprises or consists of one or more polyether polyols. In one preferred embodiment, the polymeric polyol comprises or consists of a polyether diol or triol having a weight average molecular weight from 400 to 3000 g/mol, and a polyether diol or triol having weight average molecular weight from larger than 3000 to 6000 g/mol. In another embodiment, the polymeric polyol contains essentially no (preferably less than 10 wt% or less than 5 wt% or less than 1 wt% by weight or less than 0.5 wt% of the weight of the polymeric polyol) or contains no polymeric polyol other than polyether polyol, such as polyester polyol, polycarbonate polyol, poly(meth) and/or polybutadine polyol.

If present, the at least one polymeric polyol is present in the foamable polyurethan composition from 10% to 60% by weight, preferably from 20% to 50% by weight, and more preferably from 30% to 40% by weight based on the weight of the foamable polyurethane composition.

### Polyisocyanate

The polyisocyanate can be any compound having on average at least two, i.e. two, three or more terminated isocyanate groups per molecule. As incorporated herein the term "polyisocyanate" encompasses diisocyanate, polymeric isocyanates, and isocyanate-terminated oligomers, prepolymers and polymers. It can be used both individually and in mixtures.

In one embodiment, the polyisocyanate is selected from the group consisting of an aromatic polyisocyanate, an alicyclic polyisocyanate, an aliphatic polyisocyanate, and mixture thereof, and preferably is one or more aromatic polyisocyanates. The polyisocyanate preferably has an NCO content of 20 to 30%. The viscosity of the polyisocyanate is preferably no more than 5000 mPa.s.

Some advantageous polyisocyanates have the general structure O=C=N-X-N=C=O where X is an aliphatic, alicyclic or aryl radical, preferably an aliphatic or alicyclic radical containing 4 to 18 carbon atoms.

Some suitable isocyanates include 1,5-naphthylene diisocyanate, diphenyl methane diisocyanate (MDI) including the 2,2'- 2,4'- and 4,4'- isomers, polymeric MDI (pMDI), hydrogenated MDI (HMDI), xylylene diisocyanate (XDI), tetramethyl xylylene diisocyanate (TMXDI), di- and tetraalkylene diphenylmethane diisocyanate, 4,4'-dibenzyl diisocyanate, 1,3-phenylene diisocyanate, 1,4-phenylene diisocyanate, the isomers of toluene diisocyanate (TDI), 1-methyl-2,4-diisocyanatocyclohexane, 1,6-diiso-cyanato-2,2,4-trimethyl hexane, 1,6-diisocyanato-2,4,4-trimethyl hexane, 1-isocyanatomethyl-3-isocyanato-1,5,5-trimethyl cyclohexane (IPDI), chlorinated and brominated diisocyanates, phosphorus-containing diisocyanates, 4,4'-diisocyanatophenyl perfluoroethane, tetramethoxybutane-1,4-diisocyanate, butane-1,4-diisocyanate, hexane-1,6-diisocyanate (HDI), dicyclohexylmethane diisocyanate, cyclo-hexane-1,4-diisocyanate, ethylene diisocyanate, phthalic acid-bis-isocyanatoethyl ester; diisocyanates containing reactive halogen atoms, such as 1-chloromethylphenyl-2,4-diisocyanate, 1-bromomethylphenyl-2,6-diisocyanate or 3,3-bis-chloromethylether4,4'-diphenyl diisocyanate.

Some suitable isocyanates include isocyanate functional pre-polymers. Such pre-polymers are formed by reacting excess amount of polyisocyanate with a polyol, a polyamine, polythiol, or the combination of them. "Excess" is understood to mean that there are more equivalents of isocyanate functionality from the polyisocyanate compound than equivalents of hydroxyl functionality from the polyol present during reaction to form the pre-polymer. In this disclosure, it is to be understood that the terms polyisocyanate pre-polymer or pre-polymer or isocyanate functional pre-polymer are applied to any compound made according to the forgoing description, i.e., as long as the compound is made with at least a stoichiometric excess of isocyanate groups to isocyanate reactive groups it will be referred to herein as polyisocyanate pre-polymer or a pre-polymer or isocyanate functional pre-polymer.

Sulfur-containing polyisocyanates are obtained, for example, by reaction of 2 mole hexamethylene diisocyanate with 1 mole thiodiglycol or dihydroxydihexyl sulfide. Other suitable diisocyanates are, for example, trimethyl hexamethylene diisocyanate, 1,4-diisocyanatobutane, 1,12-diisocyanatododecane and dimer fatty acid diisocyanate. Suitable diisocyanates are the tetramethylene diisocyanate, hexamethylene diisocyanate, undecane diisocyanate, dodecamethylene diisocyanate, 2,2,4-trimethylhexane-2,3,3-trimethylhexamethylene diisocyanate, 1,3-cyclohexane diisocyanate, 1,4-cyclohexane diisocyanate, 1,3- and 1,4-tetramethyl xylene diisocyanate, isophorone, 4,4-dicyclohexylmethane, tetramethylxylylene (TMXDI) and lysine ester diisocyanate.

Aliphatic polyisocyanates with two or more isocyanate functionality formed by biuret linkage, uretdione linkage, allophanate linkage, and/or by trimerization are suitable.

Suitable at least trifunctional isocyanates are polyisocyanates formed by trimerization or oligomerization of diisocyanates or by reaction of diisocyanates with polyfunctional compounds containing hydroxyl or amino groups. Isocyanates suitable for the production of trimers are the diisocyanates mentioned above, the trimerization products of HDI, MDI, TDI or IPDI being preferred.

Blocked, reversibly capped polyisocyanates, such as 1,3,5-tris-[6-(1-methylpropylideneaminoxycarbonylamino)-hexyl]-2,4,6-trix-ohexahydro-1,3,5-triazine, are also suitable. The polymeric isocyanates formed, for example, as residue in the distillation of diisocyanates are also suitable for use. The polyisocyanate encompasses a single compound or the mixture of two or more compounds.

The polyisocyanates can be isocyanate-terminated prepolymer. The isocyanate-terminated prepolymer is the reaction product of at least one isocyanate as described above and at least one polyol as described above. The corresponding prepolymers typically have an NCO content of 5 to 20 wt % (determined according to Spiegelberger, DIN EN ISO 1 1909:2007-05).

The molecular weight of the isocyanate-terminated prepolymer is usually within the range from 500 g/mol to 100000 g/mol, preferably from 600 g/mol to 25000 g/mol more preferably from 700 g/mol to 6000 g/mol. The preparation of the NCO-terminated prepolymers is well-known to the skilled worker and carried out for example such that the liquid at reaction temperatures polyols are mixed with an excess of the isocyanates and the resulting mixture is stirred until a constant NCO-value. Such isocyanate-terminated prepolymer is commercially available such as Loctite UR 7225 from Henkel.

In one preferred embodiment, the polyisocyanate is selected from diphenyl methane diisocyanate (MDI), polymeric MDI (pMDI), MDI-terminated prepolymer and combination thereof.

The at least one polyisocyanate is present in an amount from 5% to 50% by weight, preferably from 10% to 30% by weight based on the weight of the foamable polyurethane composition.

The polyisocyanate may be stored in a separate component (isocyanate component) before curing with polymeric polyols, and is present in the isocyanate component in an amount from 5 to 30 wt%, preferably from 15 to 20 wt%, based on the total weight of the isocyanate component.

### Nitrile

The foamable polyurethane composition further comprises at least one nitrile selected from an aliphatic nitrile having 2 to 20 carbon atoms, preferably 2 to 12 carbon atoms, more preferably 2 to 8 carbon atoms, and an alicyclic nitrile having 6 to 20 carbon atoms, preferably 6 to 16 carbon atoms, more preferably 6 to 12 carbon atoms. In one embodiment, the nitrile is non-substituted or halogen substituted. In another embodiment, the nitril is a linear or branched aliphatic nitrile.

Examples of such nitriles include but not limited to acetonitrile, propionitrile, butyronitrile, isobutyronitrile, valeronitrile, isovaleronitrile, lauronitrile, 2-methylbutyronitrile, 2,2-dimethylbutyronitrile, hexanenitrile, cyclopentanecarbonitrile, cyclohexanecarbonitrile, acrylonitrile, methacrylonitrile, crotononitrile, 3-methylcrotononitrile, 2-methyl-2-butenenitrile, 2-pentenenitrile, 2-methyl-2-pentenenitrile, 3-methyl-2-pentenenitrile, 2-hexenenitrile, fluoroacetonitrile, difluoroacetonitrile, trifluoroacetonitrile, 2-fluoropropionitrile, 3-fluoropropionitrile, 2,2-difluoropropionitrile, 2,3-difluoropropionitrile, 3,3-difluoropropionitrile, 2,2,3-trifluoropropionitrile, 3,3,3-trifluoropropionitrile, 2,2,3-propanetricarbonitrile, 1,3,5-pentanetricarbonitrile, pentafluoropropionitrile, malononitrile, succinonitrile, glutaronitrile, adiponitrile, pimelonitrile, suberonitrile, azelanitrile, sebaconitrile, undecanedinitrile, dodecanedinitrile, methylmalononitrile, ethylmalononitrile, isopropylmalononitrile, tert-butylmalononitrile, methylsuccinonitrile, 2,2-dimethylsuccinonitrile, 2,3-dimethylsuccinonitrile, trimethylsuccinonitrile, tetramethylsuccinonitrile, 1,2,3-tris(2-cyanoethoxy)propane. In one preferred embodiment, the nitrile is one or more selected from acetonitrile, propionitrile, butyronitrile, isobutyronitrile, valeronitrile, isovaleronitrile, lauronitrile, 2-methylbutyronitrile, 2,2-dimethylbutyronitrile, hexanenitrile, and in particular is valeronitrile.

The nitrile functions as blowing agent in the foamable polyurethane composition to react with the polymeric polyol preferably in the existence of catalyst, and generate ammonia in accordance with the reaction scheme as follows. 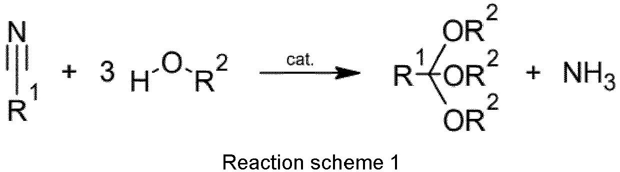 wherein R¹ represents a non-functional and non-reactive, non-substituted or substituted alkyl or cycloalkyl group and R² represents hydrocarbyl group having more or more hydroxy groups.

The polyurethane foam is obtained when the generated ammonia gas expands the cured polyurethane formed from the reaction between the excess polymeric polymeric polyol and the polyisocyanate.

The at least one nitrile is present in an amount from 0.05% to 2% by weight, preferably from 0.1% to 1% by weight based on the weight of the foamable polyurethane composition. If the nitrile(s) is used in the above ranges, unpleasant odor may not be detected by human sense of smell during curing and foaming of the composition while excellent foaming of the cured product still can be achieved, as the amount of generated ammonia is sufficient for foaming the cured product.

### Catalyst

The foamable polyurethane composition according to the present invention contains one or more catalysts. The catalyst may be one or more of acidic, neutral and/or basic catalysts as long as it is compatible with other reactants and can accelerate the reaction between polyisocyanate and polymeric polyol and/or the reaction between nitrile and polymeric polyol. In one preferred embodiment, the catalyst can accelerate both reactions.

The catalyst comprised in the foamable polyurethane composition may be one or more acidic catalysts. "Acidic catalyst" refers to a catalyst having a pKa value lower than 7, preferably lower than 6, more preferably lower than 4 and most preferably lower than 3. The term pKa is a measure of the tendency of a molecule or ion to keep a proton, H⁺, at its dissociation center(s). It is related to dissociation capabilities of chemical species. The pKa value is the negative logarithm of the equilibrium acid dissociation constant, Ka. In the context of the present invention, pKa values are measured in water at 25±1 °C. Examples of the acidic catalyst are Lewis-acid, Brønsted-acid, organic acid and inorganic acid.

Preferably, the acidic catalyst is one or more organometallic acidic catalyst. Examples of the organometallic catalyst include tin (II) compounds, tin (IV) compounds, lead (II) compounds, bismuth (III) compounds, nickel compounds, cobalt compounds, chromium compounds, manganese compounds, antimony compounds, zinc compounds, iron compounds, copper compounds, lithium compounds, and the like. One type of these may be used alone, or two or more types of these may be used in combination. Among these, from the viewpoint of foaming ability, tin (II) compounds are preferable, and dicarboxylic acid salts of aliphatic carboxylic acids having 6 to 20 carbon atoms and tin (II) are particularly preferable. Examples of the aliphatic carboxylic acid include octanoic acid, 2-ethylhexanoic acid, neodecanoic acid, lauric acid, stearic acid, oleic acid, linoleic acid, linolenic acid, and the like. Specific examples of the tin (II) compound include tin (II) bis (2-ethylhexanoate), tin (II) bis(neodecanoate), tin (II) bis(laurate) (such as dibutyltin dilaurate) and the like. In one preferred embodiment, the acidic catalyst is dibutyltin dilaurate.

The catalyst comprised in the foamable polyurethane composition may be one or more basic catalysts. "Basic catalyst" refers to a catalyst having a pKa value higher than 7, preferably higher than 8, more preferably higher than 9 and most preferably higher than 10. The term pKa is a measure of the tendency of a molecule or ion to keep a proton, H⁺, at its dissociation center(s). It is related to dissociation capabilities of chemical species. The pKa value is the negative logarithm of the equilibrium acid dissociation constant, Ka. In the context of the present invention, pKa values are measured in water at 25±1°C. Examples of the basic catalyst are Lewis-base, Brønsted-base, organic base and inorganic base. In one embodiment, the basic catalyst is one or more tertiary amine compounds, preferably selected from 1,5-diazabicyclo[4.3.0]non-5-ene, 1,8-diazabicyclo[5.4.0]undec-7-ene, 1,5,7-triazabicyclo-[4.4.0]dec-5-ene, tetramethylbutane diamine, bis(dimethylaminoethyl)ether, 1,4-diazabicyclo[2.2.2]octane, 2,2'-dimorpholino diethyl ether, dimethyl piperazine and mixture thereof. In one preferred embodiment, the basic catalyst is 1,4-diazabicyclo[2.2.2]octane.

In the present invention, the at least one catalyst is preferably an organometallic acidic catalyst or a tertiary amine catalyst.

The at least one catalyst is present from 0.01% to 1% by weight, preferably from 0.05% to 0.5% by weight based on the weight of the foamable polyurethane composition.

### Filler

The foamable polyurethane composition may comprise at least one filler, preferably selected from aluminum oxide, aluminum hydroxide, aluminum silicate, calcium silicate, magnesium silicate, calcium carbonate, barium sulfate, calcium sulfate, glass fibers, carbon black, silica and combination thereof. In one embodiment, the filler is selected from aluminum oxide, aluminum hydroxide, calcium carbonate, silica and combination thereof.

The filler may have an average particle diameter D50 from 0.1 µm to 150 µm, preferably from 0.5 µm to 120 µm. The filler can be used in single or in mixture of two or more materials having different particle sizes.

In the present invention, there are no particular restrictions on the shape of the filler. The shape may be a regular or irregular shape and includes but is not limited to polygon, cube, oval, sphere, needle, flake, plate or any combination thereof. Preferably, the fillers are in a spherical shape. The filler may be surface-modified or non-surface modified.

Examples of commercially available aluminium oxides include, for example, AX1 M from NIPPON STEEL Chemical & Material Co., Ltd.; NASR-05 from Bestry Performance Materials Co., Ltd.; DAW-01 from Denka Corporation. BAK 10 from Bestry Performance Materials Co., Ltd.; BA 7 from Bestry Performance Materials Co., Ltd.; BAK 5 from Bestry Performance Materials Co., Ltd.

Examples of commercially available aluminium hydroxides include, for example Martinal series products from Huber Advanced Materials.

Examples of commercially available aluminium silicates include, for example ASP 170 from BASF.

Examples of commercially available calcium carbonates include, for example Omya BLH from Omya.

Examples of commercially available silicas include fumed silicas such as CAB-O-SIL M5 from Carbot.

The filler is present in an amount from 30% to 90% by weight, preferably from 35% to 85% by weight, more preferably from 40% to 80% by weight, based on the weight of the foamable polyurethane composition.

### Chain extender

The foamable polyurethane composition according to the present invention may comprise a chain extender. Usually, chain extenders are low molecular weight molecules used to modify the backbone of a given polymer. The chain extender has a molecular weight Mₙ of 60 to 600 g/mol, and more preferably from 60 to 500 g/mol. In a preferred embodiment, the chain extender is a short chain diol, in particular a linear or branched, alkyl or cycloalkyl diol with 9 or less carbon atoms. In an especially preferred embodiment, the chain extender is selected from the group consisting of 1,2-propanediol, 1,3-propanediol, 2-methyl-1,3-propanediol, 1,2-butanediol, 1,3-butanediol, 1,4-butanediol, 1,5-pentanediol, 3-methyl-1,5-prentanediol, 1,6-hexanediol, 1,9-nonanediol, 1,12-dodecandiol, ethylene glycol, propylene glycol, neopentyl glycol, butylene glycol, cyclohexane-1,2-diol, cyclohexane-1,4-diol, 1,4-bis(hydroxymethyl)cyclohexane and mixtures thereof.

The chain extender may be present in the polyol component in an amount less than 1 wt% based on the total weight of polyol component. In one embodiment, the polyol component essentially contains no chain extender, e.g. contains no more than 0.5 wt%, preferably no more than 0.1 wt%, more preferably no more than 0.05 wt%, and in particular contains no chain extender.

### Flame retardant

The foamable polyurethane composition according to the present invention may comprise one or more flame retardant. Conventional flame retardants can optionally be incorporated, preferably in an amount of not more than about 20 wt% of the foamable polyurethane composition, or not more than about 15 wt%, or not more than about 10 wt%. Optional flame retardants include tris(2-chloroethyl)phosphate, tris(2-chloropropyl)phosphate, tris(2,3-dibromopropyl)phosphate, tris(l,3-dichloropropyl)phosphate, tri(2-chloroisopropyl)phosphate, cresyl diphenyl phosphate, tricresyl phosphate, tri(2,2-dichloroisopropyl)phosphate, diethyl-N,N-bis(2-hydroxyethyl)aminomethylphosphonate, dimethylmethylphosphonate, tri(2,3-dibromopropyl)phosphate, tri(1,3-dichloropropyl)phosphate, and tetra-kis-(2-chloroethyl)ethylene diphosphate, triethylphosphate, diammonium phosphate, various halogenated aromatic compounds, antimony oxide, polyvinyl chloride, melamine, and the like. In one preferred embodiment, the flame retardant is cresyl diphenyl phosphate.

### Additive

The composition according to the invention may further comprise additives. The additives are preferably selected such that they do not enter into a reaction or a side reaction with the isocyanates or polymeric polyols, at least not during the period of the cross-linking and foaming reactions. Preferably, the one or more additives are selected from the group consisting of co-catalyst, plasticizer, pigments, additional blowing agents, rheology modifiers, drying agents, water scavenger, solvent and anti-settling agent. In preferred embodiment the amount of the additives presents in the foamable polyurethane composition is from 0 to 10 wt%, preferably from 0.1 to 5 wt%, based on the total weight of the foamable polyurethane composition.

The foaming reaction achieved by the present invention may not rely on the presence of water as blowing agent although a fewer amount of water may be contained e.g. as impurity of the raw materials. In one embodiment, water is present in an amount of no more than 1% by weight, preferably no more than 0.1% by weight, and more preferably no more than 0.05% by weight based on the weight of the foamable polyurethane composition.

### Properties of foamable polyurethane composition

In order to be processable in industrial application, the foamable polyurethane composition needs to have a viscosity that allows easy and precise application. Therefore, an embodiment is preferred wherein the foamable composition according to the invention has a viscosity of no more than 10000 Pa·s, preferably no more than 1000 Pa·s, in particular from 30 to 1000 Pa·s, measured by Anton Paar Rotational Rheometer with parallel plates (20 mm diameter) at a shear rate of 2.4 s⁻¹ at 20°C. In addition, the foamable composition according to the invention has a density from 2 to 3 g/mL and preferably from 2.2 to 2.8 g/mL.

In addition, the foamable polyurethane composition according to the present invention foams at a temperature of less than 60°C, preferably less than 50°C, more preferably less than 40°C, in particular from 20°C to 30°C or under room temperature, and exhibits a volume increase defined as the ratio of (the volume of foamed product minus the volume of the foamable composition) to the volume of the foamable composition of no less than 50%, preferably no less than 70%, and more preferably no less than 90% when foaming and curing at 23°C for 30 min.

Moreover, the foamable polyurethane composition preferably does not generate unpleasant odor during foaming, detected by human sense of smell.

The foamable polyurethane composition according to the present application may be in the form of one-part, two-part or multi-part composition. In one embodiment, the foamable polyurethane composition may be kept and stored in one-part when the reactants are inert under storage conditions, for example by blocking the reactive groups of some reactants.

When the foamable polyurethane composition is a two-component composition, it consists of:
a polyol component comprising:
   at least one polymeric polyol having an average hydroxyl functionality from at least 1.8, and
   at least one catalyst; and
an isocyanate component comprising:
   at least one polyisocyanate having on average at least two isocyanate groups per molecule, and
   at least one nitrile selected from an aliphatic nitrile having 2 to 20 carbon atoms, an alicyclic nitrile having 6 to 20 carbon atoms, and combination thereof,
in which at least one additive selected from co-catalysts, fillers, flame retardants, chain extenders, solvents, and combination thereof is optionally comprised in the polyol component and/or the isocyanate component.

The polyol component and the isocyanate component may be mixed in a ratio from 1:10 to 10:1 by weight depending on the choices of polymeric polyol, polyisocyanate and nitrile as long as a cured polyurethane foam product can be obtained.

The foamable polyurethane composition in the present invention is storage stable for at least 1 day, preferably at least 10 days, and more preferably at least 30 days under atmospheric conditions (at 23°C and 50% relative humidity).

When necessary, a portion of components such as filler or other additives can be kept in one or more parts other than the polyol and isocyanate components, which forms a multi-part foamable polyurethane composition.

A further object of the invention is cured foam product obtained by curing the foamable polyurethane composition according to the present invention. Curing and foaming of the inventive composition can be carried out by common methods well known to the person skilled in the art, such as low energy and room temperature curing, treatment with radiation, for example UV light, exposure to moisture, induction and/or heating. In one embodiment, the curing and foaming are conducted at a temperature from 20°C to 30°C, preferably at room temperature, i.e. from 23°C to 25°C.

The cured foam may be thermally conductive. In a preferred embodiment, the cured foam exhibits a thermal conductivity of at least 0.8 W/mK, preferably from 1.0 to 3.2 W/mK, determined according to ISO 22007-2 at 25°C. The cured foam may be flexible, semi-rigid or rigid. In one preferred embodiment, the cured foam exhibits a Shore A hardness from 20 to 90, preferably from 30 to 60 measured according to according to ASTM D2240 after curing for 3 days.

In order to produce foamable polyurethane composition according to the invention, the polyol component and isocyanate component and other optional components are mixed optionally under heating, subsequently optionally solid components should be dissolved in the mixtures. Subsequently, the additives are mixed and dispersed. In this context, the humidity content should be kept low, for example water can be reduced by means of molecular sieves. Inert additives may also partially be admixed to the polyisocyanate. For application, the polyol parts and the isocyanate parts are mixed together in a manner known per se and the mixture is applied to the substrates to be bonded together.

A further object of the present invention is a method of bonding two substrates together, comprising:
providing the foamable polyurethane composition according to the present invention,
applying the composition to one or more surfaces of at least a first substrate,
placing at least one surface of a second substrate in contact with the composition, and
allowing the composition to cure and foam.

In a preferred embodiment, contacting of the first substrate to be bonded with the second substrate to be bonded is carried out by applying pressure.

The method according to the invention is especially suitable for the manufacture of temperature-sensitive devices. In a preferred embodiment, the foaming composition is therefore applied onto the surface of the first substrate at a temperature from 20 to 100°C, preferably from 20 to 70°C, and more preferably from 20 to 30°C, or under room temperature.

The foamable polyurethane composition may be applied in a process for adhering substrates, such as metal and composite materials. The process generally comprises providing the composition described herein and applying the composition to one or more surfaces of at least a first substrate and then placing at least one surface of a second substrate in contact with the composition, allowing the composition to cure and foam at a temperature of less than 60°C, preferably less than 50°C, more preferably less than 40°C, in particular from 20°C to 30°C, even more preferably at room temperature. Substrates include composite materials comprising unsaturated polyester resin materials, vinyl ester resin materials, epoxy resin materials; metals, plastic films and other plastic materials. In embodiments, the process is used to adhere composite materials together or to adhere metal to composite materials. The process can further comprise surface treatment of one or more of the surfaces that come into contact with the foamable polyurethane composition, but in embodiments no surface treatment is applied to the substrates.

The invention further encompasses articles/parts comprising two or more pieces where the pieces are adhered together, such as a part for an automobile or other transportation vehicle, like a motorcycle, bicycle, train, boat, airplane or space vehicle. The parts comprise at least two substrates and one or more layers of the foamed polyurethane, which adheres the substrates to each other.

A further object is an article obtainable according to method of manufacture according to the invention. Preferably, the article according to the invention comprises the cured foam according to the invention.

A further object is to use the foamable polyurethane composition or the foam in bonding articles having substrates made of composite materials selected from unsaturated polyester resin materials, vinyl ester resin materials, epoxy resin materials, metals, plastic materials, and mixture thereof.

The foamable composition according to the invention can be applied in a variety of technical fields and is especially suitable in the manufacture of heat-sensitive objects, in particular objects where heat is generated. Accordingly, a further object of the present invention is the use of the inventive foamable polyurethane composition in pipes, preferably cooling coils; in electronic components, preferably light-emitting devices, computer devices, mobile phones, tablets, touch screens, energy storage devices, automotive technology, hifi systems, and audio systems; in joints between heat pipes and water tanks in solar heated heating; in fuel cell and wind turbines; in the manufacture of computer chips; in light devices; batteries; in housings; in coolers; heat exchanging devices; wires; cables; heating wires; household appliances such as refrigerators and dishwashers; air conditionings; accumulators; transformers; lasers; functional clothing; car seats; medical devices; fire protection; electric motors; planes and trains.

The invention will be illustrated in more detail by way of the following examples which are not to be understood as limiting the concept of the invention.

### Examples

The following materials were used in the examples.

Voranol CP 4755 is a polyether triol having a weight average molecular weight of 4800 g/mol obtained from Dow.

Lupranol 2090 is polyether triol having a weight average molecular weight of 6000 g/mol obtained from BASF.

Caradol ED56-300 is a polyether diol having a weight average molecular weight of 2000 g/mol obtained from Shell.

Voranol CP 450 is a polyether triol having a weight average molecular weight of 450 g/mol obtained from Dow.

Apyral 16 is an aluminum hydroxide filler obtained from Nabaltec.

Disflamoll DPK is a flame retardant of cresyl diphenyl phosphate obtained from Lanxess.

Cab-O-Sil M5 is a fumed silica filler obtained from Cabot.

DBTL is an acidic catalyst of dibutyltin dilaurate obtained from Evonik.

Dabco 33 LV is a basic catalyst of 1,4-diazabicyclo[2.2.2]octane obtained from Evonik.

Valeronitrile was obtained from Sigma-Aldrich.

Desmodur VKS 20 is a mixture of diphenylmethane-4,4'-diisocyanate (MDI) with isomers and higher functional homologues (pMDI) obtained from Covestro.

Diethylether is a solvent obtained from Sigma-Aldrich.

### Formulations of polyol component

Polyol components of the foamable compositions were formulated according to the ingredients and amounts in Table 1 by mixing well all components in a 500 mL glass beaker at 25°C.

**Table 1. Formulations of polyol component (PC) of the foamable composition (in gram)**

| | PC-1 | PC-2 | PC-3 | PC-4 | PC-5 |
|---|---|---|---|---|---|
| Voranol CP 4755 | - | - | - | 35.2 | - |
| Lupranol 2090 | 20 | 20 | 26.3 | - | 20 |
| Caradol ED56-300 | 26.2 | 26.1 | 20 | - | 26.2 |
| Voranol CP 450 | - | - | - | 1 | - |
| Apyral 16 | 53 | 53 | 53 | 53.6 | 53 |
| Disflamoll DPK | - | - | - | 9.5 | - |
| Cab-O-Sil M5 | 0.5 | 0.5 | 0.6 | 0.5 | 0.5 |
| DBTL | 0.3 | 0.4 | 0.2 | 0.2 | - |
| Dabco 33 LV | - | - | - | - | 0.3 |

### Formulations of isocyanate component

Isocyanate components of the foamable compositions were formulated according to the ingredients and amounts in Table 2 by mixing well all components except the fillers and flame retardant (if present) under vacuum with a Planetary mixer Labotop 2LA A64 G2 (from PC Laborsystem) until the mixture was dissolved completely, the vacuum was gassed with dry nitrogen, and the thermal conductive filler and flame retardant (if present) were added into the mixture and mixing well to obtain isocyanate components under vacuum.

**Table 2. Formulations of isocyanate component (IC) of the foamable compositions (in gram)**

| | IC-1 | IC-2 |
|---|---|---|
| Valeronitrile | 3 | 2.5 |
| Desmodur VKS 20 | 97 | 97.5 |

### Formulations of two-component foamable composition and test results

Two-component foamable compositions were prepared according to the formulations in Table 3 by mixing the two components well in a 500 mL beaker at 23°C. The volume increase of the foamed product was recorded after 30 min from the reaction, and the Shore A hardness of the foamed product was measured according to ASTM D2240 after curing for 3 days. In addition, it was evaluated if unpleasant odor generated in the reaction was detected by human sense of smell. The results are shown in Table 3.

**Table 3. Formulations of two-component foamable composition (FC) and test results**

| | FC-1 | FC-2 | FC-3 | FC-4 | FC-5 |
|---|---|---|---|---|---|
| Polyol component | PC-1 | PC-2 | PC-3 | PC-4 | PC-5 |
| Isocyanate component | IC-1 | IC-2 | IC-1 | IC-1 | IC-1 |
| Mixing ratio (by weight) | 100:20 | 100:15 | 100:12 | 100:10 | 100:20 |
| Volume increase (%) | 90% | 120% | 130% | 50% | 90% |
| Shore A hardness | 44.1 | 56.5 | 42.7 | 59.4 | 45.3 |
| Odor | No | No | No | No | No |

As can be seen from the test results, all examples showed excellent foaming performance and curing performance. In addition, no unpleasant odor was detected as only a fewer amount of ammonia generated during foaming.

## Claims

1. A foamable polyurethane composition, comprising:
at least one polymeric polyol having an average hydroxyl functionality from at least 1.8,
at least one polyisocyanate having on average at least two isocyanate groups per molecule,
at least one nitrile selected from an aliphatic nitrile having 2 to 20 carbon atoms, an alicyclic nitrile having 6 to 20 carbon atoms, and combination thereof, and
at least one catalyst.

2. The foamable polyurethane composition according to claim 1, wherein polymeric polyol is selected from polyether polyol, polyester polyol, polybutadiene polyol, polycarbonate polyol and combination thereof, and preferably is selected from polyether polyol, polyester polyol and combination thereof, and more preferably is polyether polyol.

3. The foamable polyurethane composition according to claim 1 or 2, wherein the polymeric polyol is selected from polyether diol, polyether triol and combination thereof.

4. The foamable polyurethane composition according to any of claims 1 to 3, wherein the polyisocyanate is selected from aromatic polyisocyanates, alicyclic polyisocyanates, aliphatic polyisocyanates, and combination thereof, and preferably is one or more aromatic polyisocyanates.

5. The foamable polyurethane composition according to any of claims 1 to 4, wherein the at least one nitrile is selected from acetonitrile, propionitrile, butyronitrile, isobutyronitrile, valeronitrile, isovaleronitrile, lauronitrile, 2-methylbutyronitrile, 2,2-dimethylbutyronitrile, hexanenitrile, cyclopentanecarbonitrile, cyclohexanecarbonitrile, acrylonitrile, methacrylonitrile, crotononitrile, 3-methylcrotononitrile, 2-methyl-2-butenenitrile, 2-pentenenitrile, 2-methyl-2-pentenenitrile, 3-methyl-2-pentenenitrile, 2-hexenenitrile, fluoroacetonitrile, difluoroacetonitrile, trifluoroacetonitrile, 2-fluoropropionitrile, 3-fluoropropionitrile, 2,2-difluoropropionitrile, 2,3-difluoropropionitrile, 3,3-difluoropropionitrile, 2,2,3-trifluoropropionitrile, 3,3,3-trifluoropropionitrile, 2,2,3-propanetricarbonitrile, 1,3,5-pentanetricarbonitrile, pentafluoropropionitrile, malononitrile, succinonitrile, glutaronitrile, adiponitrile, pimelonitrile, suberonitrile, azelanitrile, sebaconitrile, undecanedinitrile, dodecanedinitrile, methylmalononitrile, ethylmalononitrile, isopropylmalononitrile, tert-butylmalononitrile, methylsuccinonitrile, 2,2-dimethylsuccinonitrile, 2,3-dimethylsuccinonitrile, trimethylsuccinonitrile, tetramethylsuccinonitrile, 1,2,3-tris(2-cyanoethoxy)propane, and combination thereof, and more preferably is selected from acetonitrile, propionitrile, butyronitrile, isobutyronitrile, valeronitrile, isovaleronitrile, lauronitrile, 2-methylbutyronitrile, 2,2-dimethylbutyronitrile, hexanenitrile, and in particular is valeronitrile.

6. The foamable polyurethane composition according to any of claims 1 to 5, wherein the catalyst is an organometallic acidic catalyst or a tertiary amine catalyst.

7. The foamable polyurethane composition according to any of claims 1 to 6, further comprising at least one additive selected from co-catalysts, chain extenders, flame retardants, fillers, solvents and combination thereof.

8. The foamable polyurethane composition according to any of claims 1 to 7, comprising water present in an amount of no more than 1% by weight, preferably no more than 0.1% by weight, and more preferably no more than 0.05% by weight based on the weight of the foamable polyurethane composition.

9. The foamable polyurethane composition according to any of claims 1 to 8, having a volume increase of no less than 50%, preferably no less than 70%, and more preferably no less than 90% when foaming at 23°C for 30 min.

10. The foamable polyurethane composition according to any of claims 1 to 9, which is a one-component, two-component or multi-component composition.

11. The foamable polyurethane composition according to any of claims 1 to 10, which is a two-component composition consisting of:
a polyol component comprising:
at least one polymeric polyol having an average hydroxyl functionality from at least 1.8, and
at least one catalyst; and
an isocyanate component comprising:
at least one polyisocyanate having on average at least two isocyanate groups per molecule, and
at least one nitrile selected from an aliphatic nitrile having 2 to 20 carbon atoms, an alicyclic nitrile having 6 to 20 carbon atoms, and combination thereof,
in which at least one additive selected from fillers, flame retardants, chain extenders, solvents, and combination thereof is optionally comprised in the polyol component and/or the isocyanate component.

12. A foam obtained by curing and foaming the foamable polyurethane composition according to any one of claims 1 to 11 at a temperature from 20°C to 30°C.

13. The foam according to claim 12, having a Shore A hardness from 20 to 90, preferably from 30 to 60.

14. A method of bonding two substrates together, comprising:
providing the foamable polyurethane composition according to any one of claims 1 to 11,
applying the composition to one or more surfaces of at least a first substrate,
placing at least one surface of a second substrate in contact with the foamable polyurethane composition, and
allowing the foamable polyurethane composition to cure and foam from 20°C to 30°C.

15. The use of the foamable polyurethane composition according to any one of claims 1 to 11 or the foam according to claim 12 or 13 in bonding articles having substrates made of composite materials selected from unsaturated polyester resin materials, vinyl ester resin materials, epoxy resin materials, metals, plastic materials, and mixture thereof.
